# EUROPEAN PATENT SPECIFICATION

(11) **EP 3 600 138 B1**
(45) Date of publication and mention of the grant of the patent: **12.05.2021**
(21) Application number: 18711908.6
(22) Date of filing: 15.03.2018
(51) Int. Cl.: A61C 13/00, A61C 1/00

(54) **SYSTEM AND METHOD FOR MANUFACTURING DENTAL WORKPIECE**
SYSTEM UND VERFAHREN ZUR HERSTELLUNG EINES DENTALEN WERKSTÜCKS
SYSTÈME ET PROCÉDÉ DE FABRICATION D'UNE PIÈCE DENTAIRE

(30) Priority: 20.03.2017 US 201762473794 P
(43) Date of publication of application: 05.02.2020
(73) Proprietor: Straumann Holding AG, 4052 Basel (CH)
(72) Inventor: PAPPAS, Christos, 4002 Basel (CH); MEIER, Marcus, 4002 Basel (CH); BUSCHMANN, Daniel, 4002 Basel (CH); MESSIAS, Marco Andre Machado, 4002 Basel (CH)
(74) Representative: Michalski Hüttermann & Partner Patentanwälte mbB
(86) International application number: PCT/EP2018/056534
(87) International publication number: WO 2018/172180

(56) References cited:
- US-A1- 2004 197 737
- US-A1- 2010 233 655
- US-A1- 2010 310 786
- US-A1- 2015 093 720

## Description

### Technical Field

The present disclosure relates generally to a manufacturing system and, more particularly, to a system and method for manufacturing dental workpieces including prostheses, support structures, and drill or surgical templates.

### Background

Additive manufacturing is a process of creating three-dimensional components by depositing overlapping layers of material, typically under the guided control of a computer. One technique of additive manufacturing is known as direct metal laser sintering (DMLS). The DMLS technique uses a laser to direct a high-energy beam into a powdered metal medium at precise locations corresponding to features and dimensions of the component to be manufactured. As the energy beam contacts the powdered metal, the powdered metal is caused to melt and weld together and to previously melted layers of the component.

In some situations, a component created only via DMLS is complete and in final form. In other situations, however, for example in situations where tight tolerances on size and/or form are required, other manufacturing steps (e.g., subtractive steps) may be taken. These steps can include creation of a base component (e.g., via milling and/or lathing) on which the printed component can subsequently be fabricated. The base component may have tight external tolerances in critical areas that cannot be achieved via additive manufacturing.

DMLS and conventional subtractive manufacturing operations have been used together to create dental prostheses. For example, U.S. Patent No. 8,778,443 of Uckelmann et al. that issued on July 15, 2014 ("the '443 patent") describes a method for manufacturing an abutment for a dental implant. The method includes mounting a generic base member previously prefabricated via milling onto a platform. The method then includes laser-sintering a customized main body onto the base member in a layer-by-layer manner.

Although, the method described in the '443 patent may be used to produce high-quality dental prostheses, the method may still be less than optimal in some circumstances. For example, because the method of the '443 patent uses a generic base member, the completed implant abutment may not match well the contours of a specific patient's mouth. This may be particularly true when the implant abutment spans multiple tooth sites. An abutment that does not match the contours of the patient's mouth may be uncomfortable, unhygienic, and unreliable.

US 2010/310786 A1 describes systems and methods to employ various modes of material deposition and material removal to build a complex, three-dimensional structure upon a rotating base.

US 2010/233655 A1 describes that by capturing a highly detailed three-dimensional digital model of dentition, a suitable replacement dental article can be fabricated with a combination of digitally-controlled reductive processes such as milling and digitally-controlled additive processes such as digital painting.

US 2004/197737 A1 describes a method for manufacturing implant abutments for dental implants, wherein the implant abutment comprises a prefabricated base member for joining the implant abutment to the dental implant, and a customized main body.

The disclosed system and method are directed to overcoming one or more of the problems set forth above and/or other problems of the prior art. In particular, the invention is defined by the features of the independent claims. Advantageous embodiments are the subject of the dependent claims. They may be combined freely unless the context clearly indicates otherwise.

### Summary

The invention is as defined in the appended claims.

In one aspect, the present disclosure is directed to a system for manufacturing a dental device. The system may include a subtractive machine configured to manufacture a base of the dental device from a material blank, and an additive machine configured to manufacture a top of the dental device by adding material onto a surface of the base. The system may also include a controller in communication with the subtractive machine and the additive machine. The controller may be programmed to receive digital data corresponding to a mouth of a particular patient, and to control operation of the subtractive machine to customize the base based on the digital data.

In yet another aspect, the present disclosure is directed to a method for manufacturing a dental device. The method may include receiving digital data corresponding to a mouth of a particular patient and, based on the digital data, subtractively manufacturing from a material blank a base of the dental device. The method may also include additively manufacturing a top of the dental device on a surface of the base.

In particular, a system for manufacturing a dental device comprises:
a subtractive machine configured to manufacture a base of the dental device from a material blank;
an additive machine configured to manufacture a top of the dental device by adding material onto a surface of the base; and
a controller in communication with the subtractive machine and the additive machine, the controller being programmed to:
   receive digital data corresponding to at least one of a mouth of a particular patient and the dental device; and
   control operation of the subtractive machine to customize the base based on the digital data.

In an embodiment of the system the controller is further configured to control operation of the additive machine to customize the top based on the digital data.

In another embodiment of the system the controller is further configured to: determine in a virtual model of the dental device a first location of at least one feature having geometry that can be fabricated by the subtractive machine;
determine in the virtual model of the dental device a second location of at least one feature having geometry that can be fabricated by the additive machine; and
determine in the virtual model a location of a plane separating the first location from the second location, wherein the plane forms a virtual boundary at least partially defining the base and the top.

In another embodiment of the system the plane passes through multiple features of the dental device.

In another embodiment of the system:
the plane is a first plane; and
the controller is further configured to:
   determine in the virtual model of the dental device a third location of at least one feature having geometry that can be fabricated by the subtractive machine;
   determine in the virtual model of the dental device a fourth location of at least one feature having geometry that can be fabricated by the additive machine; and
   determine in the virtual model a location of a second plane separating the third location from the fourth location, wherein the second plane forms a virtual boundary at least partially defining the base and the top.

In another embodiment of the system the first location corresponds with tight-tolerance and high-precision; and
the second location corresponds with complex freeform geometry.

In another embodiment of the system the dental device is one of a superstructure, a substructure used for mounting of the superstructure, and a template used to install the superstructure or substructure in a mouth of a particular patient.

In another embodiment of the system the subtractive machine is configured to manufacture a reference feature associated with the material blank for use in at least one of placing the base of the dental device inside the additive machine and detecting an orientation of the base of the dental device inside the additive machine.

In another embodiment of the system it further includes a transfer machine configured to transfer the base from the subtractive machine to the additive machine based on a location of the reference feature.

In another embodiment of the system the additive machine is configured to sinter the top from a powdered metal.

In another embodiment of the system select surfaces of the base correspond to one of an implant abutment face, a threaded bore, or a cusp surface.

In particular, a method for manufacturing a dental device comprises: receiving digital data corresponding to at least one of a mouth of a particular patient and the dental device; subtractively manufacturing from a material blank a base of the dental device based on the digital data; and additively manufacturing a top of the dental device on a surface of the base.

In an embodiment of the method, additively manufacturing the top of the dental device includes additively manufacturing the top based on the digital data.

In another embodiment the method further includes: determining in a virtual model of the dental device a first location of at least one feature having geometry that can be fabricated by subtractive manufacturing;
determining in the virtual model of the dental device a second location of at least one feature having geometry that can be fabricated by additive manufacturing; and
determining in the virtual model a location of a plane separating the first location from the second location, wherein the plane forms a virtual boundary at least partially defining the base and the top.

In another embodiment of the method the plane passes through multiple features of the dental device.

In another embodiment of the method the plane is a first plane and the method further includes:
determining in the virtual model of the dental device a third location of at least one feature having geometry that can be fabricated by subtractive manufacturing;
determining in the virtual model of the dental device a fourth location of at least one feature having geometry that can be fabricated by additive manufacturing; and
determining in the virtual model a location of a second plane separating the third location from the fourth location, wherein the second plane forms a virtual boundary at least partially defining the base and the top.

In another embodiment of the method the first location corresponds with tight-tolerance and high-precision; and the second location corresponds with complex freeform geometry.

In another embodiment of the method the dental device is one of a superstructure, a substructure used for mounting of the superstructure, and a template used to install the dental device in a mouth of a particular patient.

In another embodiment the method further includes subtractively manufacturing a reference feature associated with the material blank for use in placement of the base prior to additively manufacturing the top.

In another embodiment of the method additively manufacturing the top includes sintering the top from a powdered metal.

In another embodiment of the method select surfaces of the base correspond to one of an implant abutment face, a threaded bore, or a cusp surface.

The invention is also directed towards a dental device manufactured via a method according to the invention.

### Brief Description of the Drawings

Figs. 1-3 are perspective illustrations of exemplary disclosed dental devices;
Fig. 4 is a diagrammatic illustration of an exemplary disclosed system for manufacturing the dental devices of Figs. 1-3; and
Figs. 5, 6, and 7 are simplified perspective and cutaway illustrations of exemplary dental devices that may be processed by the system of Fig. 4.

### Detailed Description

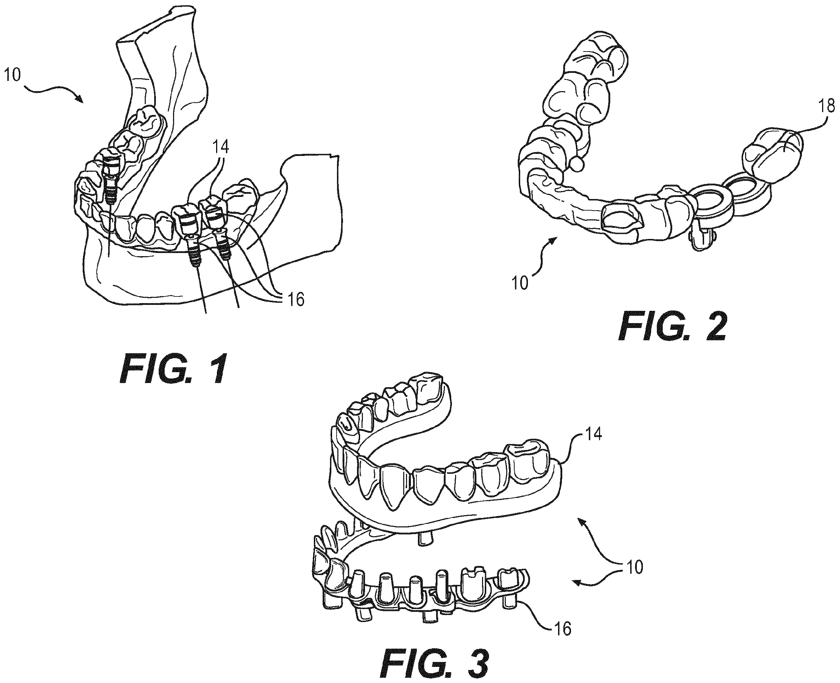

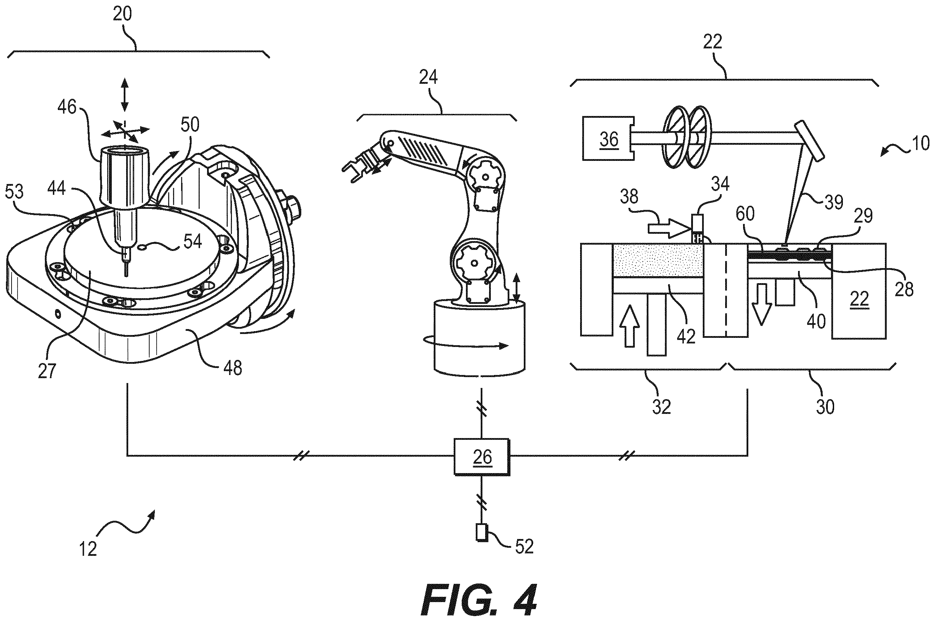

Figs. 1, 2, and 3 illustrate different dental devices 10 that can be manufactured by an exemplary system 12, which is shown in Fig. 4 and described in detail below. Dental devices 10 of Figs. 1-3 may be manufactured from any type of material to have any desired shape. For example, dental devices 10 may be manufactured from a metal, such as titanium, a titanium/aluminum/vanadium alloy, a titanium/aluminum/niobium alloy, a titanium/zirconium alloy, a cobalt/chromium alloy, or another similar alloy. It is also contemplated that dental devices 10 could alternatively be manufactured from a non-metallic material, for example from a ceramic, a plastic, or a composite, as desired. Dental devices 10 may include, among other things, superstructures (e.g., bridges, crowns, dentures, and other prostheses) 14, substructures (e.g., abutments, bars, implants, screws, and other similar structures) 16 that are configured to provide mounting for superstructures 14, and templates (e.g., drill and/or surgical templates) 18 that are used to prepare a patient's mouth for receiving the other types of dental devices 10. It should be noted that most dental devices 10 are uniquely designed (e.g., sized, shaped, contoured, and/or finished) for a particular patient based on x-rays of the patient's underlying bone structure and/or 3-D scans of the patient's mouth. Accordingly, the x-rays, scan images, and other similar digital data may at least partially define dental devices 10, and care should be taken to manufacture dental devices 10 as close to the digital data as possible.

Fig. 4 illustrates system 12 as having multiple machines that cooperate during the manufacture of dental devices 10 (referring to Figs. 1-3). These machines may include, among other things, a subtractive machine ("machine") 20, an additive machine ("machine") 22, a transfer machine 24, and a controller 26 in communication with each of the other machines. As will be explained in more detail below, machine 20 may use the digital data associated with a particular dental device 10 to machine down a material blank 27 and produce a high-precision 3¬D base 28 that is unique to a particular patient (e.g., that matches the size, shape, contour, and/or surface texture of the patient's mouth and, in particular, that includes any connecting interfaces to existing implants). Machine 22 may then build upon base 28 a corresponding 3-D top 29 also using the digital data in order to produce the particular dental device 10. Transfer machine 24 may automatically move base 28 from machine 20 to machine 22; and controller 26 may store the digital data and/or control operations of machines 20-24. It is contemplated that transfer machine 24 could be omitted in some embodiments, if desired, and base 28 manually transferred between machines 20 and 22. It is also contemplated that, instead of a centralized controller 26, each of machines 20-24 could have its own dedicated controller 26. Finally, it is contemplated that, instead of utilizing two separate fabrication machines 20, 22 and a transfer machine 24 to transport base 28 between the machines, a single fabrication machine (e.g., a machine having both additive and subtractive capabilities) could instead be used to make dental devices 10, if desired.

Machine 20 may embody any type of machine known in the art that is used to remove (i.e., "subtract") material from select surfaces of material blank 27. In the disclosed exemplary embodiment, machine 20 is a general or specific-use milling machine having a computer-controlled rotary cutter 44 that is configured to cut away chips of material from surfaces of material blank 27. In particular, one or more actuators 46 may be connected to cutter 44 and configured to spin cutter 44 about its own axis while also advancing teeth (not shown) of cutter 44 into the surfaces of material blank 27 at desired locations. The relative spinning and/or translating between cutter 44 and material blank 27 may be precisely controlled (e.g., via controller 26) based on the digital data defining dental device 10, material blank 27, and/or cutter 44. It is contemplated that machine 20 could form a portion of a larger machining center, if desired, and have access to one or more automatic tool changers, tool carousels, coolant systems, debris collection, and/or enclosures. It is contemplated that another type of machine, for example a laser ablation or milling machine could also or alternatively be used to remove material from the surfaces of material blank 27, if desired.

In the disclosed exemplary embodiment, machine 20 includes a holder 48 configured to receive and secure material blank 27 during the material-removal process performed by cutter 44 and described above. In the disclosed example, a recess 50 is formed within holder 48 and designed to receive material blank 27 of a standard size, shape, and/or configuration. In the disclosed exemplary embodiment, recess 50 is shown as a generally cylindrical socket having a diameter and depth specifically associated with material blank 27 and/or the manufacture of dental devices 10. Recess 50 may be accessible to cutter 44 from one side or opposing sides, as desired. For example, holder 48 may have windows therein that allow cutter 44 to pass through and access material blank 27 over a large area and/or from a wide range of angles. Holder 48 may be movable to allow the desired access (e.g., holder 48 may be configured to flip over) and/or cutter 44 may be moved to the side(s) of material blank 27 requiring cutting, as desired. A flange 53, clamp, fastener, clip, or other similar device may be used to retain material blank 27 inside recess 50 of holder 48.

Machine 22 may take many different forms. In the disclosed exemplary embodiment, machine 22 is a sintering type of machine having a build chamber 30, a material chamber 32, a recoater 34, and an energy source 36. Recoater 34 may be configured to push powdered material from material chamber 32 into build chamber 30 (in a direction indicated by an arrow 38) and on top of base 28, and energy source 36 may be selectively activated to sinter (e.g., to melt) a pattern in the powder (e.g., by way of a laser beam 39) and thereby produce layers of solidified material on base 28 that form top 29. After each layer of material is solidified, a platform 40 in build chamber 30 (along with base 28 and any already fabricated layers of top 29) may be incrementally lowered; a platform 42 in material chamber 32 (along with the powdered material) may be incrementally raised; and recoater 34 may push a new layer of powdered material over the solidified layer for sintering of a new layer of top 29. It is contemplated that machine 22 could embody another type of additive machine (e.g., a vat photo-polymerization machine, a material jetting machine, a binder jetting machine, a material extrusion machine, a directed energy deposition machine, or another machine), if desired.

The placement of material blank 27 (or at least knowledge of the placement) inside of holder 48 may affect material removal from blank 27 and/or subsequent material additions to base 28. For example, cutter 44 of machine 20 may be guided by controller 26 based on known geometry of material blank 27 and also based on a known or assumed relative location between cutter 44 and material blank 27. For this reason, machine 20 may be equipped with a way to locate and/or detect the location of material blank 27 during and/or after placement within recess 50. This may include, for example, one or more reference features 54 formed in material blank 27 and/or holder 48 (e.g., within and/or around recess 50) that are configured to engage material blank 27 in a particular manner so as to precisely locate and/or orient material blank 27. Alternatively or additionally, a scanner, imaging device, and/or measurement probe (not shown) may be used by machine 20 to detect the location of feature(s) 54 and/or material blank 27 after placement within holder 48. In one example, reference feature 54 is a cylindrical depression or hole formed at a center of material blank 27. Reference feature(s) 54 may be prefabricated within material blank 27 or machined into material blank 27 by machine 20 during manufacture of base 28. It is contemplated that feature(s) 54 may be used in one or both of machines 20, 22 to properly position, orient, machine, and/or build up layers of dental devices 10. Other methods may also be used, if desired.

In the disclosed exemplary embodiment of Fig. 4, transfer machine 24 is a robotic arm capable of retrieving base 28 from machine 20 (e.g., from within recess 50 after machining) and placing base 28 inside of build chamber 30 in preparation for subsequent layer buildup. In an alternative exemplary embodiment (not shown), transfer machine 24 may be an overhead gantry capable of moving base 28 in the same manner described above. Other embodiments may also be possible. It is contemplated that, in addition to moving base 28 from machine 20 into machine 22, machine 24 may also move holder 48 between machines 20, 22 while base 28 remains secured within recess 50. This may help to improve the placement accuracy of base 28 inside build chamber 30, in some instances. It is also contemplated that in some applications, transfer machine 24, in addition to moving base 28 and/or holder 48, may also be configured to perform one or more additional processes (e.g., cleaning away of machined material chips, detecting base location and/or orientation, etc.) during movement of base 28, if desired.

Controller 26 may embody a single processor or multiple processors that include a means for controlling an operation of system 12. Numerous commercially available processors may perform the functions of controller 26. Controller 26 may include or be associated with a memory for storing data such as, for example, the digital data associated with dental device 10 and/or blank 27, operating conditions of machines 20-24, design limits, performance characteristics or specifications, operational instructions, etc. Various other known circuits may be associated with controller 26, including power supply circuitry, signal-conditioning circuitry, solenoid driver circuitry, communication circuitry, and other appropriate circuitry. Moreover, controller 26 may be capable of communicating with other components of system 12 (e.g., with each of machines 20-24) via either wired or wireless transmission and, as such, controller 26 could be connected directly to machines 20-24 or alternatively disposed in a location remote from machines 20-24 and indirectly connected (e.g., wirelessly).

In some exemplary embodiments, controller 26 may rely on sensory information when regulating operations of machines 20-24. This sensory information may include, for example, a detected location and/or orientation of material blank 27 within recess 50 of work holder 48, a detected location and/or orientation of base 28 within build chamber 30, and a tracked location and/or orientation of transfer machine 24 (e.g., a grasping hand of machine 24). The sensory information may be provided by way of one or more sensors 52, for example a proximity sensor, an actuator sensor, a measurement probe, a camera, etc. Signals generated by sensor(s) 52 may be directed to controller 26 for processing.

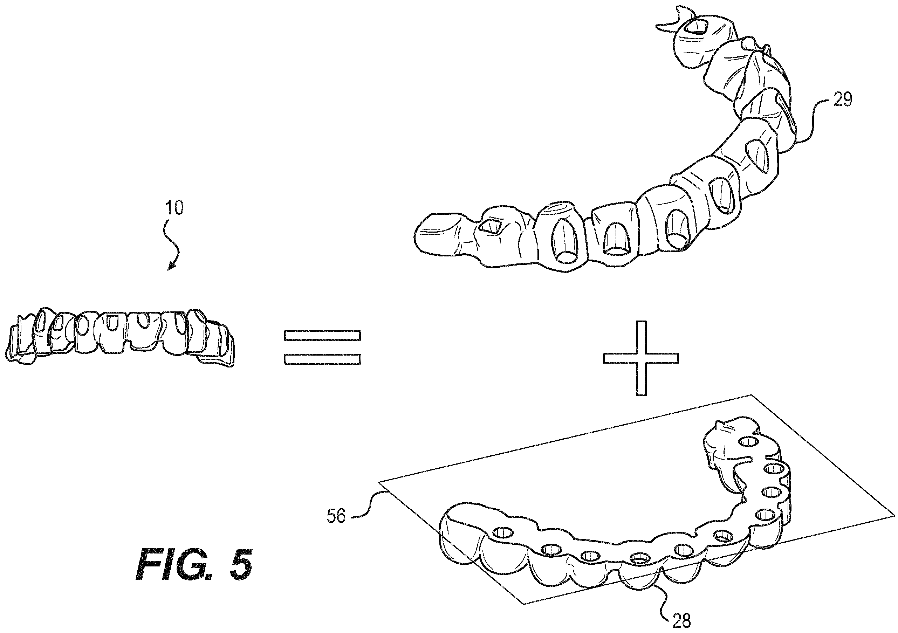

As described above and shown in the exemplary embodiment of Fig. 5, dental device 10 may include at least two primary components that are fabricated together as a single integral part. These components include base 28 and top 29. It should be noted that, when material blank 27 is initially cut by machine 20, only base 28 may be fabricated. That is, after completion of the cutting processes by machine 20, dental device 10 may not yet have a final size, shape, and/or contour necessary for use within the patient's mouth. Base 28 of dental devices 10 may still require extra material at select locations where machine 22 will perform the additive processes described above.

Base 28 and top 29 may be fabricated by different machines and/or processes due to the specific tolerances and geometric requirements of each of these components. For example, base 28 may include features intended to engage other devices or existing dentistry in the patient's mouth and, therefore, requires tighter tolerances and/or finer surface finishes that are best achieved by machine 20. These features may include, for example, abutment faces, threaded bores, and/or cusp surfaces (not shown). Abutment faces may mate tightly against faces of corresponding implants and, accordingly, accurate contours at these faces may be required for proper engagement. Threaded bores may receive screws or other fasteners that are used to anchor dental devices within the patient's mouth. Accordingly, proper alignment of the bores and crisp threading may be required to ensure a desired placement in relation to existing contours surrounding dental devices 10. The cusp surfaces may need to be accurate in order to ensure that damage to dental devices 10 and/or the surrounding dentistry does not occur during use. Top 29 may be additively manufactured by machine 22 to create complex geometries not otherwise possible via traditional subtractive processes and/or rougher surfaces that can improve bonding with cosmetic veneers or other similar outer covers. The complex geometries can include, for example, curving passages and imbedded fasteners.

A virtual model of dental device 10 may be created for a particular patient (e.g., based on the digital data described above), and then divided into base 28 and top 29 along at least one plane 56. In the embodiment of Fig. 5, plane 56 passes through every feature (e.g., every tooth site) of dental device 10 and is located such that a majority (e.g., all) of the high-precision, tight-tolerance features of dental device 10 are positioned to one side (e.g., the lower side shown in Fig. 5) of plane 56, while a majority (e.g., all) of the complicated, free-form features are positioned to an opposing side (e.g., the upper side shown in Fig. 5). Plane 56 may be generally perpendicular to a center axis passing through material blank 27 (referring to Fig. 4) or oriented at another desired angle. The digital data associated with each divided portion of the virtual model of dental device 10 (e.g., associated with base 28 and top 29) may then be sent to controller 26 and used to regulate fabrication via the respective machines 20, 22.

Dividing the virtual model of dental device 10 into base 28 and top 29 may allow use of a thinner material blank 27, as compared to subtractively producing the entirety of dental device 10. This may reduce the amount of material to be subtractively removed, saving manufacturing time and reducing waste. Such waste may not be recyclable in all cases, leading to increased cost of a fully subtractively manufactured dental device 10.

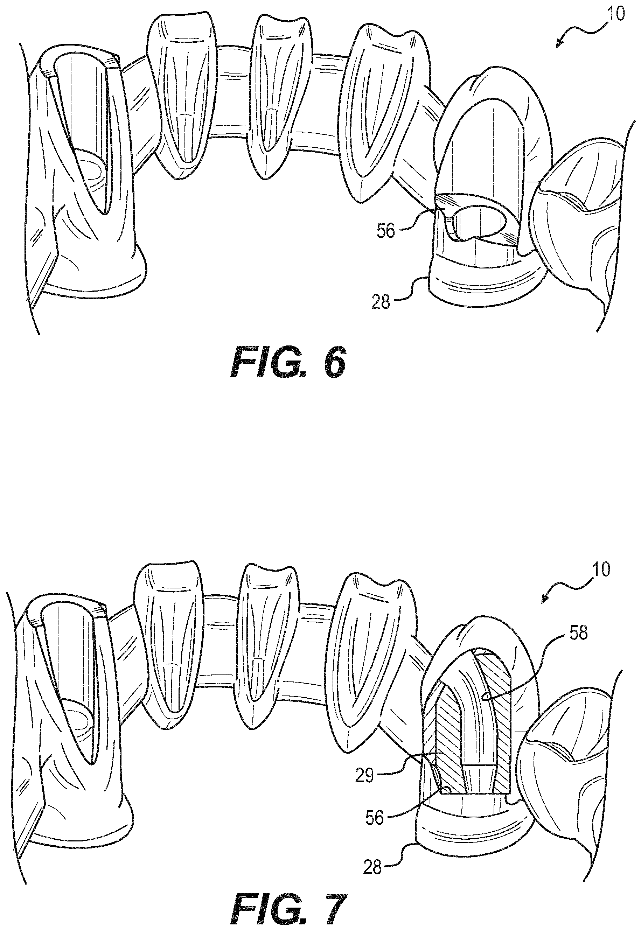

In an alternative embodiment shown in Figs. 6 and 7, plane 56 does not pass through every feature of dental device 10. In contrast, plane 56 of Figs. 6 and 7 passes through a limited number of features and is located only where the high-precision and tight-tolerances or complicated and free-form features are required. In particular, plane 56 could pass through a single feature (e.g., a single tooth site) of dental device 10, such that a majority of dental device 10 is subtractively manufactured or the majority of dental device 10 is additively manufactured. In the example of Fig. 6 and 7, the majority of dental device 10 is subtractively manufactured by machine 20, with only a complex curving passage 58 being subsequently manufactured by machine 22. It is contemplated that any number of separate planes 56 could be used to define base 28 and top 29 within a single dental device 10. In these embodiments, the different planes 56 could be aligned with each other or located at different elevations and orientations.

According to the invention during subtractive manufacturing, machine 20 co-forms a support structure with base 28 from material blank 27. The support structure includes an outer frame 60 (shown only in Fig. 4, inside of build chamber 30 of machine 22) that at least partially surrounds base 28, and one or more connectors (not shown) that extend between outer frame 60 and base 28. In these embodiments, outer frame 60 and the connectors support base 28 during transfer between machines 20 and 22, function as an adapter for use in placing dental devices 10 inside machines 22 and 24, and securely mounts base 28 inside of machine 22 during the addition of top 29. In some exemplary embodiments, outer frame 60 and the associated connectors may also function as a shipping container during transport of dental devices 10 to a final-use destination (e.g., to a dentist's or oral surgeon's office) after the additive processes of machine 22 are complete. Outer frame 60 may be removed before installation of dental device 10, for example by cutting away of the associated connectors.

It is contemplated that a single dental device 10 or multiple dental devices 10 may be fabricated inside a single outer frame 60. For example, multiple dental devices 10 may be nested inside each other and inside of outer frame 60. By fabricating multiple dental devices 10 inside the same outer frame 60, greater efficiencies may be achieved. In some exemplary embodiments, the particular dental devices 10 formed within the same outer frame 60 may correspond with the same patient and/or the same surgical procedure. For example, a kit may be created by co-forming one or more superstructures 14, substructures 16, and/or templates 18 (referring to Figs. 1-3) for a single patient within the same outer frame 60. In this way, all parts of the kit may be fabricated at the same time, in the same location, from the same materials, and/or by the same machines, thereby providing for ease of part handling and inventory tracking, improved efficiency, enhanced accuracy, and better assembly fit. In some instances, the parts of a particular kit may even be transported together within outer frame 60 to the final-use destination.

### Industrial Applicability

The disclosed system and method may be used to manufacture a wide range of well-fitting dental devices in an accurate manner. The dental devices manufactured by the disclosed system may conform well to a patient's mouth because most (if not all) parts of each dental device are customized for each patient. Accuracy may be achieved through the combined use of subtractive and additive manufacturing processes, such that areas of high-precision and also areas of high-complexity can be produced within required tolerances. Operation of system 12 will now be described in detail.

At a start of a manufacturing event, digital data regarding a dental device 10 to be produced may be electronically loaded into controller 26 (referring to Fig. 4). This digital data may include a shape, a size, a contour, a location and/or orientation of plane 56, etc. associated with the particular dental device 10, as well as specifications of the associated material blank 27 that is to be used. Material blank 27 may then be physically loaded into holder 48 of machine 20, and controller 26 may use the digital data to regulate operation of cutter 44. In particular, cutter 44 may be controlled to remove material from select surfaces of material blank 27, thereby creating base 28 upon which top 29 can be subsequently added.

Once machining of base 28 has been completed, any chip material around base 28 may be removed (e.g., brushed away, vacuumed up, etc.). Transfer machine 24 may then transport base 28 from machine 20 to machine 22, and place base 28 in a desired location inside of build chamber 30. In some exemplary embodiments, base 28 may need to be oriented in a particular way before sintering can begin. This may include, for example, aligning particular reference features 54 of base 28 (and/or holder 48) with corresponding features in build chamber 30. In another example, base 28 may be loaded into build chamber 30 in any desired manner, but the resulting location and/or orientation may need to be detected thereafter.

The digital data described above may then be used to control operation of build chamber 30, material chamber 32, recoater 34, and energy source 36. For example, platform 40 may be lowered in an amount corresponding to a desired thickness of a first layer of top 29 on base 28. At about the same time, platform 42 may be raised by at least this same thickness. Thereafter, recoater 34 may be driven by associated actuator(s) to push material protruding from material chamber 32 above a lower edge of the corresponding recoater into build chamber 30 and on top of base 28. The material may be spread across platform 40 in a relatively consistent and well-distributed manner. Thereafter, energy source 36 may be activated to sinter the powdered material in a pattern corresponding to the size, shape, and/or contour of top 29 at the particular height above platform 40. Platform 40 may then be lowered by a thickness of a second layer of top 29, and the process may be repeated. It should be noted that, in some embodiments (e.g., embodiments, where plane 56 passes through only a single feature of dental device 10 and is surrounded by other taller features), a different method of additive manufacturing (e.g., vat photo-polymerization, material jetting, binder jetting, material extruding, or directed energy depositing) may be required. Once all layers of top 29 have solidified, any powdered material around dental device 10 may be removed (e.g., brushed away, vacuumed up, etc.). Dental device 10 may thereafter be installed within the corresponding patient's mouth. In some embodiments, outer frame 60 and/or the associated connectors may first need to be cut away from dental device 10 prior to installation.

It will be apparent to those skilled in the art that various modifications and variations can be made to the disclosed system and method. Other embodiments will be apparent to those skilled in the art from consideration of the specification and practice of the disclosed system and method. For example, when referring the "mouth" of a particular patient, such reference is intended to encompass only part (e.g., only soft tissue, only hard tissue, a particular combination of soft and hard tissues, etc.) or all of the mouth. It is intended that the specification and examples be considered as exemplary only.

## Claims

1. A system (12) for manufacturing a dental device (10), comprising:
a subtractive machine (20) configured to manufacture a base (28) of the dental device (10) and a support structure comprising an outer frame (60) from a material blank (27);
an additive machine (22) configured to manufacture a top (29) of the dental device (10) by adding material onto a surface of the base (28) being mounted with the outer frame (60) inside the additive machine (22); and
a controller (26) in communication with the subtractive machine (20) and the additive machine (22), the controller (26) being programmed to:
receive digital data corresponding to at least one of a mouth of a particular patient and the dental device (10); and
control operation of the subtractive machine (20) to customize the base (28) based on the digital data; whereby
the outer frame (60) at least partially surrounds the base (28) and comprises one or more connectors that extend between the outer frame (60) and the base (28) thereby functioning as an adapter for use in placing the dental device (10) inside the subtractive machine (20) and the additive machine (22).

2. The system (12) of claim 1, wherein the controller (26) is further configured to control operation of the additive machine (22) to customize the top (29) based on the digital data.

3. The system (12) of claim 1, wherein the controller (26) is further configured to:
determine in a virtual model of the dental device (10) a first location of at least one feature having geometry that can be fabricated by the subtractive machine (20);
determine in the virtual model of the dental device (10) a second location of at least one feature having geometry that can be fabricated by the additive machine (22); and
determine in the virtual model a location of a plane (56) separating the first location from the second location, wherein the plane (56) forms a virtual boundary at least partially defining the base (28) and the top (29).

4. The system (12) of claim 1, wherein the dental device (10) is one of a superstructure (14), a substructure (16) used for mounting of the superstructure (14), and a template (18) used to install the superstructure (14) or substructure (16) in a mouth of a particular patient.

5. The system (12) of claim 1, wherein the subtractive machine (20) is configured to manufacture a reference feature (54) associated with the material blank (27) for use in at least one of placing the base (28) of the dental device (10) inside the additive machine (22) and detecting an orientation of the base (28) of the dental device (10) inside the additive machine (22).

6. The system (12) of claim 1, wherein the additive machine (22) is configured to sinter the top (29) from a powdered metal.

7. The system (12) of claim 1, wherein select surfaces of the base (28) correspond to one of an implant abutment face, a threaded bore, or a cusp surface.

8. A method for manufacturing a dental device (10), comprising:
receiving digital data corresponding to at least one of a mouth of a particular patient and the dental device (10) with a controller (26);
subtractively manufacturing from a material blank (27) a base (28) of the dental device (10) based on the digital data and a support structure comprising an outer frame (60) in a subtractive machine (20) and controlled by the controller (26); and
additively manufacturing a top (29) of the dental device (10) on a surface of the base (28) being mounted with the outer frame (60) inside an additive machine (22) and controlled by the controller (26), whereby
the outer frame (60) at least partially surrounds the base (28) and comprises one or more connectors that extend between the outer frame (60) and the base (28) thereby functioning as an adapter for use in placing the dental device (10) inside the subtractive machine (20) and the additive machine (22).

9. The method of claim 8, wherein additively manufacturing the top (29) of the dental device (10) includes additively manufacturing the top (29) based on the digital data.

10. The method of claim 8, further including:
determining in a virtual model of the dental device (10) a first location of at least one feature having geometry that can be fabricated by subtractive manufacturing;
determining in the virtual model of the dental device (10) a second location of at least one feature having geometry that can be fabricated by additive manufacturing; and
determining in the virtual model a location of a plane (56) separating the first location from the second location, wherein the plane (56) forms a virtual boundary at least partially defining the base (28) and the top (29).

11. The method of claim 8, wherein the dental device (10) is one of a superstructure (14), a substructure (16) used for mounting of the superstructure (14), and a template (18) used to install the dental device (10) in a mouth of a particular patient.

12. The method of claim 8, further including:
subtractively manufacturing a reference feature (54) associated with the material blank (27) for use in placement of the base (28) prior to additively manufacturing the top (29).

13. The method of claim 8, wherein additively manufacturing the top (29) includes sintering the top (29) from a powdered metal.

14. The method of claim 8, wherein select surfaces of the base (28) correspond to one of an implant abutment face, a threaded bore, or a cusp surface.

## Patentansprüche

1. System (12) zum Herstellen einer Dentalvorrichtung (10), mit:
einer subtraktiven Maschine (20), die dafür konfiguriert ist, eine Basis (28) der Dentalvorrichtung (10) und eine Stützstruktur, die einen Außenrahmen (60) aufweist, aus einem Materialrohling (27) herzustellen;
einer additiven Maschine (22), die dafür konfiguriert ist, eine Oberseite (29) der Dentalvorrichtung (10) durch Hinzufügen von Material auf einer Oberfläche der Basis (28) herzustellen, die mit dem Außenrahmen (60) innerhalb der additiven Maschine (22) montiert ist; und
einer Steuereinheit (26), die mit der subtraktiven Maschine (20) und der additiven Maschine (22) kommuniziert, wobei die Steuereinheit (26) dafür programmiert ist:
digitale Daten zu empfangen, die einem Mund eines bestimmten Patienten und/oder der Dentalvorrichtung (10) entsprechen; und
den Betrieb der subtraktiven Maschine (20) zu steuern, um die Basis (28) basierend auf den digitalen Daten spezifisch anzupassen,
wobei der Außenrahmen (60) die Basis (28) zumindest teilweise umgibt und einen oder mehrere Verbinder aufweist, die sich zwischen dem Außenrahmen (60) und der Basis (28) erstrecken, so dass sie als Adapter zur Verwendung beim Platzieren der Dentalvorrichtung (10) innerhalb der subtraktiven Maschine (20) und der additiven Maschine (22) funktionieren.

2. System (12) nach Anspruch 1, wobei die Steuereinheit (26) ferner dafür konfiguriert ist, den Betrieb der additiven Maschine (22) zu steuern, um die Oberseite (29) basierend auf den digitalen Daten spezifisch anzupassen.

3. System (12) nach Anspruch 1, wobei die Steuereinheit (26) ferner dafür konfiguriert ist:
in einem virtuellen Modell der Dentalvorrichtung (10) eine erste Stelle mindestens eines Merkmals zu bestimmen, das eine Geometrie hat, die durch die subtraktive Maschine (20) hergestellt werden kann;
in dem virtuellen Modell der Dentalvorrichtung (10) eine zweite Stelle mindestens eines Merkmals zu bestimmen, das eine Geometrie hat, die durch die additive Maschine (22) hergestellt werden kann; und
in dem virtuellen Modell eine Stelle einer Ebene (56) zu bestimmen, die die erste Stelle von der zweiten Stelle trennt, wobei die Ebene (56) eine virtuelle Grenze bildet, die die Basis (28) und die Oberseite (29) zumindest teilweise definiert.

4. System (12) nach Anspruch 1, wobei die Dentalvorrichtung (10) eine Komponente unter einer Aufbaustruktur (14), einer Unterbaustruktur (16), die zum Montieren der Aufbaustruktur (14) verwendet wird, und einer Schablone (18) ist, die zum Installieren der Aufbaustruktur (14) oder der Unterbaustruktur (16) in einem Mund eines bestimmten Patienten verwendet wird.

5. System (12) nach Anspruch 1, wobei die subtraktive Maschine (20) dafür konfiguriert ist, ein Referenzmerkmal (54), das dem Materialrohling (27) zugeordnet ist, zur Verwendung bei mindestens einem Arbeitsvorgang unter Platzieren der Basis (28) der Dentalvorrichtung (10) innerhalb der additiven Maschine (22) und Erfassen einer Ausrichtung der Basis (28) der Dentalvorrichtung (10) innerhalb der additiven Maschine (22) herzustellen.

6. System (12) nach Anspruch 1, wobei die additive Maschine (22) dafür konfiguriert ist, die Oberseite (29) aus einem pulverförmigen Metall zu sintern.

7. System (12) nach Anspruch 1, wobei ausgewählte Flächen der Basis (28) einer Fläche unter einer Implantatanliegefläche, einer Gewindebohrung oder einer Höckeroberfläche entsprechen.

8. Verfahren zum Herstellen einer Dentalvorrichtung (10), mit den Schritten:
Empfangen digitaler Daten, die einem Mund eines bestimmten Patienten und/oder der Dentalvorrichtung (10) entsprechen, durch eine Steuereinheit (26);
subtraktives Herstellen einer Basis (28) der Dentalvorrichtung (10) aus einem Materialrohling (27) basierend auf den digitalen Daten und einer Trägerstruktur, die einen Außenrahmen (60) aufweist, in einer subtraktiven Maschine (20) unter der Steuerung durch die Steuereinheit (26); und
additives Herstellen einer Oberseite (29) der Dentalvorrichtung (10) auf einer Oberfläche der Basis (28), die mit dem Außenrahmen (60) in einer additiven Maschine (22) montiert ist und durch die Steuereinheit (26) gesteuert wird,
wobei der Außenrahmen (60) die Basis (28) zumindest teilweise umgibt und einen oder mehrere Verbinder aufweist, die sich zwischen dem Außenrahmen (60) und der Basis (28) erstrecken und dadurch als ein Adapter zur Verwendung beim Platzieren der Dentalvorrichtung (10) innerhalb der subtraktiven Maschine (20) und der additiven Maschine (22) funktionieren.

9. Verfahren nach Anspruch 8, wobei das additive Herstellen der Oberseite (29) der Dentalvorrichtung (10) das additive Herstellen der Oberseite (29) basierend auf den digitalen Daten aufweist.

10. Verfahren nach Anspruch 8, ferner mit den Schritten:
Bestimmen einer ersten Stelle mindestens eines Merkmals, das eine Geometrie hat, die durch subtraktives Herstellen hergestellt werden kann, in einem virtuellen Modell der Dentalvorrichtung (10);
Bestimmen einer zweiten Stelle mindestens eines Merkmals, das eine Geometrie hat, die durch additives Herstellen hergestellt werden kann, in dem virtuellen Modell der Dentalvorrichtung (10); und
Bestimmen einer Stelle einer Ebene (56), die die erste Stelle von der zweiten Stelle trennt, in dem virtuellen Modell der Dentalvorrichtung (10), wobei die Ebene (56) eine virtuelle Grenze bildet, die die Basis (28) und die Oberseite (29) zumindest teilweise definiert.

11. Verfahren nach Anspruch 8, wobei die Dentalvorrichtung (10) eine Komponente unter einer Aufbaustruktur (14), einer Unterbaustruktur (16), die zum Montieren der Aufbaustruktur (14) verwendet wird, und einer Schablone (18) ist, die zum Installieren der Dentalvorrichtung (10) in einem Mund eines bestimmten Patienten verwendet wird.

12. Verfahren nach Anspruch 8, ferner mit dem Schritt zum subtraktiven Herstellen eines Referenzmerkmals (54), das dem Materialrohling (27) zugeordnet ist, zur Verwendung beim Platzieren der Basis (28) vor dem additiven Herstellen der Oberseite (29).

13. Verfahren nach Anspruch 8, wobei das additive Herstellen der Oberseite (29) das Sintern der Oberseite (29) aus einem pulverförmigen Metall aufweist.

14. Verfahren nach Anspruch 8, wobei ausgewählte Oberflächen der Basis (28) einer Fläche unter einer Implantatanliegefläche, einer Gewindebohrung oder einer Höckeroberfläche entsprechen.

## Revendications

1. Système (12) de fabrication d'un dispositif dentaire (10) comprenant :
une machine soustractive (20) conçue pour fabriquer une base (28) du dispositif dentaire (10) et une structure support comprenant un cadre extérieur (60) à partir d'une ébauche de matière (27) ;
une machine additive (22) conçue pour fabriquer une partie supérieure (29) du dispositif dentaire (10) en ajoutant de la matière sur une surface de la base (28) étant montée avec le cadre extérieur (60) à l'intérieur de la machine additive (22) ; et
un dispositif de commande (26) en communication avec la machine soustractive (20) et la machine additive (22), le dispositif de commande (26) étant programmé pour :
recevoir des données numériques correspondant à au moins une bouche d'un patient particulier et à un dispositif dentaire (10) ; et
commander le fonctionnement de la machine soustractive (20) pour personnaliser la base (28) sur la base des données numériques ; ce par quoi
le cadre extérieur (60) entoure au moins partiellement la base (28) et comprend un ou plusieurs connecteurs qui s'étendent entre le cadre extérieur (60) et la base (28), fonctionnant ainsi comme un adaptateur pour un usage dans la mise en place du dispositif dentaire (10) à l'intérieur de la machine soustractive (20) et de la machine additive (22).

2. Système (12) selon la revendication 1, dans lequel le dispositif de commande (26) est en outre conçu pour commander le fonctionnement de la machine additive (22) pour personnaliser la partie supérieure (29) sur la base des données numériques.

3. Système (12) selon la revendication 1, dans lequel le dispositif de commande (26) est en outre conçu pour :
déterminer dans un modèle virtuel du dispositif dentaire (10) un premier emplacement d'au moins une particularité ayant une géométrie qui peut être fabriquée par la machine soustractive (20) ;
déterminer dans le modèle virtuel du dispositif dentaire (10) un deuxième emplacement d'au moins une particularité ayant une géométrie qui peut être fabriquée par la machine additive (22) ; et
déterminer dans le modèle virtuel un emplacement d'un plan (56) séparant le premier emplacement du deuxième emplacement, où le plan (56) forme une limite virtuelle définissant au moins partiellement la base (28) et la partie supérieure (28).

4. Système (12) selon la revendication 1, dans lequel le dispositif dentaire (10) est une structure parmi une superstructure (14), un sous-structure (16) utilisée pour le montage de la superstructure (14), et un gabarit (18) utilisé pour installer la superstructure (14) ou la sous-structure (16) dans la bouche d'un patient particulier.

5. Système (12) selon la revendication 1, dans lequel la machine soustractive (20) est conçue pour fabriquer une particularité de référence (54) associée avec l'ébauche de matière (27) pour un usage dans au moins une action parmi la mise en place de la base (28) du dispositif dentaire (10) à l'intérieur de la machine additive (22) et la détection d'une orientation de la base (28) du dispositif dentaire (10) à l'intérieur de la machine additive (22).

6. Système (12) selon la revendication 1, dans lequel la machine additive (22) est conçue pour fritter la partie supérieure (29) à partir d'un métal pulvérulent.

7. Système (12) selon la revendication 1, dans lequel des surfaces sélectionnées de la base (28) correspondent à une surface parmi une face de pilier d'implant, un alésage fileté ou une surface cuspide.

8. Procédé de fabrication d'un dispositif dentaire (10) comprenant :
la réception de données numériques correspondant à au moins une bouche d'un patient particulier et du dispositif dentaire (10) avec un dispositif de commande (26) ;
la fabrication soustractive à partir d'une ébauche de matière (27) d'une base (28) du dispositif dentaire (10) sur la base des données numériques et d'une structure support comprenant un cadre extérieur (60) dans une machine soustractive (20) et commandée par le dispositif de commande (26) ; et
la fabrication additive d'une partie supérieure (29) du dispositif dentaire (10) sur une surface de la base (28) étant montée avec un cadre extérieur (60) à l'intérieur d'une machine additive (22) et commandée par le dispositif de commande (26), ce par quoi
le cadre extérieur (60) entoure au moins partiellement la base (28) et comprend un ou plusieurs connecteurs qui s'étendent entre le cadre extérieur (60) et la base (28), fonctionnant ainsi comme un adaptateur pour un usage dans la mise en place du dispositif dentaire (10) à l'intérieur de la machine soustractive (20) et de la machine additive (22).

9. Procédé selon la revendication 8, dans lequel la fabrication de manière additive de la partie supérieure (29) du dispositif dentaire (10) comporte la fabrication de manière additive de la partie supérieure (29) sur la base des données numériques.

10. Procédé selon la revendication 8, comportant en outre :
la détermination dans un modèle virtuel du dispositif dentaire (10) d'un premier emplacement d'au moins une particularité ayant une géométrie qui peut être fabriquée par fabrication soustractive ;
la détermination dans le modèle virtuel du dispositif dentaire (10) d'un deuxième emplacement d'au moins une particularité ayant une géométrie qui peut être fabriquée par fabrication additive ; et
la détermination dans le modèle virtuel d'un emplacement d'un plan (56) séparant le premier emplacement du deuxième emplacement, où le plan (56) forme une limite virtuelle définissant au moins partiellement la base (28) et la partie supérieure (28).

11. Procédé selon la revendication 8, dans lequel le dispositif dentaire (10) est une structure parmi une superstructure (14), une sous-structure (16) utilisée pour le montage de la superstructure (14), et un gabarit (18) utilisé pour installer le dispositif dentaire (10) dans la bouche d'un patient particulier.

12. Procédé selon la revendication 8, comprenant en outre :
la fabrication de manière soustractive d'une particularité de référence (54) associée avec l'ébauche de matière (27) pour un usage dans la mise en place de la base (28) avant une fabrication de manière additive de la partie supérieure (29).

13. Procédé selon la revendication 8, dans lequel la fabrication de manière additive de la partie supérieure (29) comporte le frittage de la partie supérieure (29) à partir d'un métal pulvérulent.

14. Procédé selon la revendication 8, dans lequel des surfaces sélectionnées de la base (28) correspondent à une surface parmi une face de pilier d'implant, un alésage fileté ou une surface cuspide.
